Europäisches Patentamt

European Patent Office

Office européen des brevets

(19)

(11) Publication number: **0 075 768**

A2

(12) # EUROPEAN PATENT APPLICATION

(21) Application number: **82108387.0**

(22) Date of filing: **11.09.82**

(51) Int. Cl.³: **B 29 F 3/10**
**B 29 F 3/04, E 06 B 9/00**
**B 29 D 9/00**

(30) Priority: **11.09.81 IT 2287381 U**

(43) Date of publication of application:
**06.04.83 Bulletin 83/14**

(84) Designated Contracting States:
**AT BE CH FR LI**

(71) Applicant: **Calcagni, Mario**
**Via Roccolo 24**
**I-21040 Morrazone Province of Varese(IT)**

(72) Inventor: **Calcagni, Mario**
**Via Roccolo 24**
**I-21040 Morrazone Province of Varese(IT)**

(74) Representative: **Modiano, Guido et al,**
**MODIANO & ASSOCIATI S.A.S. Via Meravigli, 16**
**I-20123 Milan(IT)**

(54) **Moulding structure for roller window shutters and the like.**

(57) The invention relates to a moulding structure (1) for roller window shutters which comprises an outer portion (2) of rigid PVC and an inner portion (10) of expanded PVC. A unique feature of the invention is that it comprises a reinforcement sectional member (20) which is positioned between the inner portion (10) of expanded PVC and the outer portion (2) of rigid PVC.

EP 0 075 768 A2

Croydon Printing Company Ltd.

This invention relates to a moulding structure for roller window shutters and the like.

As is known, during the manufacture of mouldings for roller window shutters and the like which are extruded from a plastic material it is necessary, in the instance of wide span dimensions, to insert into the moulding a metal core for reinforcement and stiffening purposes.

The insertion of the metal core is, however, a remarkably difficult operation, especially where the moulding includes an outer portion of expanded polyvinylchloride (PVC).

A prior Italian Patent Specification (Application No. 19858 A/81) filed by the same Applicant, which is incorporated hereto for reference purposes, as appendix, discloses a moulding which comprises an outer portion of rigid PVC and an inner portion of expanded PVC, wherein the metal reinforcing core is embedded directly into the expanded PVC portion.

That approach, while not devoid of merits from several standpoints, has the disadvantage that the metal core, being, as it is, inserted into a middle region of the moulding center body, may in some cases have an inadequate width dimension.

It is, accordingly, the task of this invention to remove the drawbacks mentioned above by providing a moulding structure for roller window shutters and the like which comprises an outer portion of rigid PVC and an inner portion of expanded PVC, whereto a large size metal core can be incorporated, in an automated manner during the moulding extrusion step, to thus achieve the advantage of a high mechanical strength also with wide span dimensions.

Within this task it is an object.of the invention to provide a moulding structure for roller window shutters which, by virtue of its unique constructional features, can give full assurance of reliability and safety in use.

It is a further object of the invention to provide such a moulding which can be readily manufactured from commercially available elements and materials, and which is competitive under the economical standpoint.

According to one aspect of the present invention the above task and objects, as well as yet other objects, such as will be apparent hereinafter, are achieved by a moulding structure for roller window shutters and the like, comprising an outer portion of rigid PVC and an inner portion of expanded PVC, characterised in that it further comprises a reinforcement sectional member positioned between said expanded PVC inner portion and said rigid PVC outer portion.

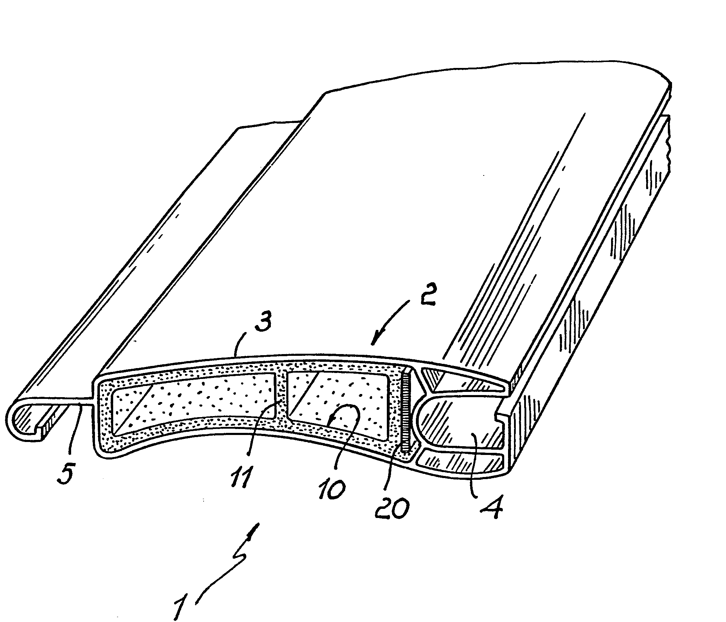

Further features and advantages will become apparent from the following detailed description of a moulding structure for roller window shutters and the like as illustrated, by way of example only, in the accompanying drawing, the one figure whereof shows a perspective view of one embodiment of the inventive moulding structure.

Making reference to the drawing figure, this roller window shutter moulding structure, generally indicated at 1, comprises an outer portion of rigid PVC, indicated at 2.

Said outer portion includes a center body 3, having a substantially flattened configuration which defines, along one side whereof, a female connection element 4, whilst along the other side it defines a male connection element 5.

Said center body 3 has, in accordance with a conventional design practice, a configuration which substantially tapers from the edge carrying the female connection element to the edge provided with the male connecting element.

On the interior of said center body, there is provided an inner portion of expanded PVC, indicated at 10, which may include, if desired, at the middle region thereof, reinforcement crosspieces 11, also formed from expanded PVC; said inner portion 10, instead of being hollow as shown, could also be a solid construction.

A peculiar feature of the invention is that provided inside said center body 3 is a reinforcement sectional member 20, which is located between the expanded PVC inner portion 10 and rigid PVC outer portion 2.

More precisely, in order to enable the insertion of a large size reinforcing sectional member, the reinforcement sectional member 20 is inserted from the wider side of the center body, i.e. the side adjoining the female connection element 4.

In the above-described embodiment, the reinforcement sectional member is practically sandwiched and retained between the expanded PVC and rigid PVC, thereby the reinforcement sectional member is effectively prevented from accidentally sliding out, the reinforcement sectional member 20 being advantageously formed from a metal sectional member.

Also with this embodiment, the sectional member can be directly incorporated during the moulding extrusion process, using a procedure similar in concept to that described in the prior patent specification cited above.

It will be appreciated from the foregoing that the invention achieves its objects, and in particular that with the foregoing arrangement, the reinforcement sectional member may assume significantly larger dimensions, to thus enable the spanning of very wide openings without the roller window shutter moulding 1 undergoing deflection.

A further important aspect is that the moulding is firmly held in position, since it is virtually embedded in an expanded PVC portion which constitutes the innermost portion, in one direction, and clamped between the rigid PVC which constitutes the outermost portion of the moulding 1, in another direction.

In practicing the invention, while the best results are to be obtained through the use of a metal core sectional member, the materials, dimensions and contingent shapes selected may be any suitable ones to meet individual requirements.

CLAIMS

1. A moulding structure for roller window shutters and the like, comprising an outer portion (2) of rigid PVC and an inner portion (10) of expanded PVC, characterised in that it further comprises a reinforcement sectional member (20) positioned between said expanded PVC inner portion (10) and said rigid PVC outer portion (2).

2. A moulding structure for roller window shutters and the like, according to Claim 1, characterised in that said reinforcement sectional member (20) is located inside a center body (3) of said roller window shutter moulding (1) in the proximities of the edge thereof where a female connection element (4) is provided.

3. A moulding structure for roller window shutters and the like, according to the preceding claims, characterised in that said reinforcement sectional member (20) is a metal sectional member.

4. A moulding structure for roller window shutters and the like, according to one or more of the preceding claims, characterised in that said reinforcement sectional member (20) is embedded, at one side in said expanded PVC forming said inner portion (10), and, at the other side, is clamped between said PVC forming said outer portion(2).

0075768

5. A moulding structure for roller window shutters and the like, according to the preceding claims, and as herein described and illustrated for the objects specified.

6. A method for manufacturing a structure according to Claims 1-5, wherein said moulding is extruded on an extrusion head as claimed in the Italian Patent Application No. 19858 A/81, characterised in that said reinforcing core, which is inserted simultaneously with the extrusion process, is located between the expanded PVC inner portion and rigid PVC outer portion.